# FASCICULE DE BREVET EUROPEEN

(11) **EP 3 956 644 B1**
(45) Date de publication et mention de la délivrance du brevet: **22.02.2023**
(21) Numéro de dépôt: 20717890.6
(22) Date de dépôt: 15.04.2020
(51) Int. Cl.: G01M 3/14, G01M 3/22

(54) **DISPOSITIF DE CONTRÔLE DE L'ÉTANCHÉITÉ DE COMPOSANTS D'ÉTANCHÉITÉ**
VORRICHTUNG ZUR ÜBERWACHUNG DER DICHTIGKEIT VON DICHTUNGSELEMENTEN
DEVICE FOR MONITORING THE TIGHTNESS OF SEALING COMPONENTS

(30) Priorité: 15.04.2019 FR 1903980
(43) Date de publication de la demande: 23.02.2022
(73) Titulaire: Gaztransport et Technigaz, 78470 Saint-Rémy-lès-Chevreuse (FR)
(72) Inventeur: JOLIVET, Pierre, 78470 SAINT REMY LES CHEVREUSE (FR); HASSLER, David, 78470 SAINT REMY LES CHEVREUSE (FR); GLORY, Julien, 78470 SAINT REMY LES CHEVREUSE (FR)
(74) Mandataire: Loyer & Abello
(86) Numéro de dépôt international: PCT/EP2020/060554
(87) Numéro de publication internationale: WO 2020/212400

(56) Documents cités:
- CH-A- 215 694
- JP-A- 2000 329 638
- JP-A- 2017 227 530
- KR-B1- 101 644 126
- US-A- 4 002 055

## Description

### Domaine technique

L'invention se rapporte au domaine des dispositifs de contrôle de l'étanchéité de composants d'étanchéité, tels qu'une membrane simple couche ou multicouche (par exemple un composite de type triplex) pour une cuve de stockage de fluide, tel qu'un gaz liquéfié. En particulier, ces cuves peuvent être des cuves étanches et thermiquement isolantes, à membranes pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) présentant une température d'environ -162°C à pression atmosphérique. Ces cuves peuvent être installées à terre, dans/sous l'eau du type GBS (pour « Gravity-Based Structure ») ou sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

### Technique antérieure

### Arrière-plan technologique

Afin de réaliser un test d'étanchéité d'une membrane d'étanchéité d'une cuve de stockage de fluide, il est connu de l'art antérieur d'utiliser un dispositif de contrôle de l'étanchéité comprenant une boite dite à vide qui comporte une chambre interne où une dépression est réalisée afin de vérifier localement l'étanchéité. Une telle boîte à vide comprend un couvercle transparent et une cloison périphérique présentant un joint d'étanchéité périphérique qui est destinée à être plaquée contre la membrane d'étanchéité à tester afin de fermer la chambre interne de manière étanche.

Pour réaliser le test d'étanchéité avec un tel dispositif de contrôle, de l'eau comprenant des tensioactifs tel que le savon est appliqué sur la portion de membrane à tester. Puis, le dispositif de contrôle est posé sur la portion à tester et la chambre interne est mise en dépression, la dimension de la membrane d'étanchéité où celles-ci sont collées l'une à l'autre. A titre d'exemple, pour une cuve de GNL ou GPL de dimensions classiques, la vérification de l'étanchéité d'une membrane recouvrant au moins partiellement les différentes faces de la cuve nécessite plusieurs milliers de tests d'étanchéité, généralement de l'ordre de 3000 à 5000 tests pour couvrir l'ensemble des zones à contrôler. Ces opérations successives sont difficiles à mettre en oeuvre, nécessitent une pluralité d'opérateurs et demandent beaucoup de temps afin de réaliser la totalité du contrôle d'étanchéité.

De plus, les systèmes de l'art antérieur présentent l'inconvénient d'avoir une étanchéité non satisfaisante au niveau du joint d'étanchéité périphérique ce qui rend le test d'étanchéité peu concluant. En effet, des bulles parasites ont tendance à se former sur tout le pourtour du joint d'étanchéité. Il devient ainsi difficile de détecter si l'apparition des bulles est due à un problème de fuite dans la membrane ou à une mauvaise étanchéité de la boite à vide.

Le document KR101644126 divulgue un dispositif de contrôle de l'étanchéité comprenant une boîte interne formant la chambre interne et une boite externe recouvrant entièrement la boîte interne et formant une chambre intermédiaire tout autour de la boîte interne. Dans ce dispositif, la boite interne et la boite externe comporte chacune un joint d'étanchéité périphérique. De plus, chaque chambre du dispositif est reliée à un organe de mise en dépression indépendant de sorte que la chambre intermédiaire est soumise à une dépression plus importante que la chambre interne.

Ce type de système, s'il permet d'améliorer l'étanchéité du dispositif de contrôle comparément à un dispositif de contrôle muni d'une seule boîte, rend difficile la lecture du test d'étanchéité. En effet, l'empilement de deux boîtes, donc deux parois formant couvercle, nuit à la visibilité de la portion à tester de la membrane. De plus, la chambre intermédiaire passant entre les deux parois formant couvercle où l'observation est réalisée, peut amener le dépôt de salissures ou de buées diminuant la visibilité lors du test d'étanchéité.

Par ailleurs, l'encombrement des deux boites superposées telles que divulguées dans ce document KR101644126 gène la lecture par l'opérateur dans des zones proches d'angles, rentrants ou sortants. US4002055 écrit un appareil pour tester l'étanchéité de jointure de feuilles de résine synthétique à l'aide d'un vide produit par une pompe dans une chambre d'essai. La chambre d'essai comprend une enveloppe semicylindrique en matériau transparent qui permet d'observer dans la zone de la fuite, si des bulles se forment. JP2000329638 décrit un dispositif de test sous vide selon le préambule de la revendication 1 pour contrôler, à l'aide d'eau savonneuse, la présence de fuite de gaz au niveau d'une jointure entre deux plaques. CH215694 vise un appareil pour vérifier l'étanchéité d'une paroi, L'appareil comporte une caisse étanche sur laquelle est branchée une pompe à vide ainsi qu'un instrument de contrôle permettant de constater si la dépression se maintient. L'une des parois de la caisse est transparente afin de voir à l'intérieur de la caisse. JP2017227530 décrit un dispositive pour mettre sous pression une soudure sur une partie métallique afin de mesurer son étanchéité.

### Résumé

Une idée à la base de l'invention est d'améliorer l'étanchéité de la boite à vide afin de réaliser un test d'étanchéité d'un composant d'étanchéité, par exemple une membrane.

Une autre idée à la base de l'invention est de permettre une bonne visibilité de la portion à tester lors du test d'étanchéité, avec un faible encombrement sur la périphérie de la boite lui permettant d'être mise en place et en oeuvre fonctionnellement dans des endroits exigus.

Une autre idée à la base de l'invention est de proposer un dispositif de contrôle de l'étanchéité qui est utilisable rapidement permettant de tester l'étanchéité d'une membrane étanche d'une cuve en un minimum de temps.

Selon un mode de réalisation, l'invention fournit un dispositif de contrôle de l'étanchéité d'un composant d'étanchéité tel qu'une membrane simple couche, par exemple une membrane métallique, ou multicouche, par exemple une membrane composite, pour une cuve de stockage de fluide, dans lequel le dispositif de contrôle comporte une boîte comprenant :
- une cloison périphérique,
- un couvercle réalisé dans un matériau transparent, le couvercle étant relié à la cloison périphérique de telle sorte que le couvercle et la cloison périphérique soient aptes à définir, avec un composant d'étanchéité, une chambre interne,
la cloison périphérique comportant :
- une paroi périphérique interne présentant une extrémité inférieure équipée d'un joint périphérique interne destiné à être positionné contre le composant d'étanchéité tout autour de la chambre interne ; et
- une paroi périphérique externe disposée à l'extérieur de la paroi périphérique interne de manière à définir, entre la paroi périphérique externe et la paroi périphérique interne une chambre intermédiaire s'étendant exclusivement dans la cloison périphérique tout autour de la chambre interne, la paroi externe périphérique présentant une extrémité inférieure équipée d'un joint périphérique externe destiné à être positionné contre le composant d'étanchéité tout autour du joint périphérique interne ;
- un dispositif de mise en dépression qui est raccordé, par exemple directement ou indirectement, à la chambre interne et à la chambre intermédiaire et est configuré pour mettre en dépression ladite chambre interne et ladite chambre intermédiaire.

Grâce à ces caractéristiques, la boite à vide présente une étanchéité suffisante pour réaliser un test d'étanchéité d'une membrane grâce notamment à la présence de deux joints d'étanchéité périphériques, interne et externe, séparés l'un de l'autre par une chambre intermédiaire également en dépression lors du test. En effet, le joint interne et le joint externe contribuent à améliorer l'étanchéité de la boîte à vide par rapport à une boite traditionnelle ne possédant qu'un seul joint d'étanchéité. De plus, du fait de la dépression dans la chambre intermédiaire, il n'y a plus d'apparition de bulle parasite dans la portion à tester lors du test d'étanchéité tout autour du joint interne formant la périphérie de la chambre interne. Seules des bulles parasites peuvent se former au niveau du joint externe, c'est-à-dire dans la chambre intermédiaire, dû à la différence de pression entre l'extérieur et la chambre intermédiaire.

Enfin, la chambre intermédiaire ne s'étend pas dans le couvercle transparent comme dans le brevet KR101644126 ce qui permet de ne pas dégrader la visibilité lors de l'observation par le couvercle transparent du test d'étanchéité. En effet, la chambre intermédiaire peut être à l'origine de salissures ou de buées qui pourraient nuire à l'observation au travers du couvercle transparent. Dans certains cas, lorsque la présente invention est envisagée en utilisant des tensioactifs pour repérer d'éventuels trous ou orifices dans le composant d'étanchéité testé, des bulles vont apparaître dans la chambre intermédiaire, initialement au niveau de la surface de ses cloisons latérales, et se propager jusqu'au couvercle transparent, ce qui gênera immanquablement la visibilité de l'opérateur.

Selon des modes de réalisation, un tel dispositif de contrôle peut comporter une ou plusieurs des caractéristiques suivantes.

Selon un mode de réalisation, le composant d'étanchéité comporte une membrane d'étanchéité.

Selon un mode de réalisation, la cloison périphérique comporte une portion supérieure reliant la paroi périphérique externe et la paroi périphérique interne au couvercle et recouvrant de manière étanche la chambre intermédiaire.

Ainsi, la portion supérieure permet de limiter le volume de la chambre intermédiaire afin de faciliter la mise en dépression de la chambre intermédiaire. De plus l'effort causé par les différentes différences de pressions sont reportés principalement sur une paroi, ce qui permet de réduire l'encombrement sur la périphérie, (plutôt que 2 parois dans le cas d'une boite dans une boite.)

Selon un mode de réalisation, le ratio entre une hauteur de la paroi périphérique interne et une hauteur de la cloison périphérique est compris entre 5 et 70%, de préférence compris entre 15 et 50%.

La direction de hauteur correspond à la direction s'étendant de la membrane d'étanchéité vers le couvercle.

Selon un mode de réalisation, le ratio entre une hauteur de la paroi périphérique externe et une hauteur de la cloison périphérique est compris entre 5 et 70%%, de préférence compris entre 15 et 50%.

Selon un mode de réalisation, la hauteur de la paroi périphérique interne est égale à la hauteur de la paroi périphérique externe.

Selon un mode de réalisation, le couvercle est réalisé en verre ou en polyméthacrylate de méthyle (PMMA).

Selon un mode de réalisation, le dispositif de contrôle comprend un tuyau d'évacuation d'air qui est raccordé, d'une part, à un organe de mise en dépression du dispositif de mise en dépression et, d'autre part, à la chambre intermédiaire de manière à placer la chambre intermédiaire sous une pression P1 inférieure à la pression atmosphérique.

Selon un mode de réalisation, la paroi périphérique interne comprend un canal de communication reliant de manière fluidique la chambre interne et la chambre intermédiaire.

Selon un mode de réalisation, le dispositif de contrôle comprend un ou plusieurs régulateurs de pression, par exemple une soupape, placés au niveau du canal de communication, ledit ou lesdits régulateurs de pression étant configurés pour que, lors de la mise en fonctionnement du dispositif de mise en dépression, la chambre interne soit placée à une pression P2 inférieure à la pression atmosphérique et supérieure à la pression P1.

Ainsi, le régulateur de pression permet d'obtenir un différentiel de pression entre la chambre interne et la chambre intermédiaire. En effet, la pression de la chambre interne est supérieure à la pression de la chambre intermédiaire. De ce fait, un gaz ne peut passer de la chambre intermédiaire vers la chambre interne, par exemple en passant sous le joint interne, et donc risquer de faire des bulles parasites. Dès lors, le régulateur de pression permet d'améliorer la fiabilité du test d'étanchéité avec le dispositif de contrôle.

Selon un mode de réalisation, l'organe de mise en dépression est un premier organe de mise en dépression et le tuyau d'évacuation d'air est un premier tuyau d'évacuation d'air, le dispositif de contrôle comprenant un deuxième tuyau d'évacuation d'air qui est raccordé, d'une part, à un deuxième organe de mise en dépression du dispositif de mise en dépression et, d'autre part, à la chambre interne de manière à placer la chambre interne sous une pression P2 inférieure à la pression atmosphérique et supérieure à la pression P1.

Ainsi, le premier organe de mise en dépression et le deuxième organe de mise en dépression permettent d'obtenir un différentiel de pression entre la chambre interne et la chambre intermédiaire. De la même manière que pour le régulateur de pression, le premier organe de mise en dépression et le deuxième organe de mise en dépression permettent donc d'améliorer la fiabilité du test d'étanchéité avec le dispositif de contrôle.

Selon un mode de réalisation, l'organe de mise en dépression, le premier organe de mise en dépression et/ou le deuxième organe de mise en dépression comporte une pompe ou un système utilisant l'effet venturi.

Selon un mode de réalisation, la différence entre la pression P2 et la pression P1 est comprise entre 100 et 5000 Pa, de préférence sensiblement égale à 1000 Pa. Par exemple, la pression P1 peut être égale à -200 mbarg (environ 8,325 10⁴ Pa) et la pression P2 peut être égale à -190 mbarg (environ 8,425 10⁴ Pa).

Selon un mode de réalisation, le dispositif de contrôle comprend :
- une poignée de manutention fixée à la boîte ;
- un organe de commande actionnable manuellement pour produire un signal de commande, l'organe de commande étant positionné sur ou à proximité immédiate de la poignée de manutention de sorte à être actionnable par une main d'un utilisateur tenant la poignée de manutention,
et dans lequel le dispositif de mise en dépression comprend une vanne commandée commutable dans un état ouvert pour relier la chambre interne et la chambre intermédiaire à l'organe de mise en dépression et un état fermé pour isoler la chambre interne et la chambre intermédiaire de l'organe de mise en dépression, le dispositif de contrôle comprenant une unité de commande configurée pour commuter la vanne commandée en réponse au signal de commande.

Grâce à ces caractéristiques, l'organe de commande situé sur ou à proximité de la poignée de manutention permet une utilisation fiable et facile par un unique utilisateur qui peut placer le dispositif de contrôle à l'aide de la poignée de manutention tout en actionnant la mise sous vide sans avoir besoin de lâcher la poignée de manutention ou nécessiter la présence d'un autre utilisateur. De plus, un tel dispositif permet une utilisation plus rapide et ainsi permet de tester l'étanchéité d'une membrane étanche d'une cuve en un minimum de temps.

Selon un mode de réalisation, l'unité de commande est configurée pour commuter la vanne commandée alternativement entre l'état ouvert et l'état fermé en réponse au signal de commande.

Selon un mode de réalisation, l'organe de commande est un premier organe de commande actionnable manuellement pour produire un premier signal de commande et le dispositif de contrôle comporte en outre un deuxième organe de commande actionnable manuellement pour produire un deuxième signal de commande, l'unité de commande étant configurée pour commuter la vanne commandée dans l'état ouvert en réponse au premier signal de commande et dans l'état fermé en réponse au deuxième signal de commande.

Selon un mode de réalisation, la poignée de manutention est une première poignée de manutention et le dispositif de contrôle comporte en outre une deuxième poignée de manutention, la première poignée de manutention et la deuxième poignée de manutention étant disposées sur le pourtour de la boite à l'opposé l'une de l'autre.

Selon un mode de réalisation, le joint périphérique ou le joint périphérique interne et/ou le joint périphérique externe présente une extrémité de joint formant une boucle tout autour de la chambre interne et destinée à être positionnée contre le composant d'étanchéité, l'extrémité de joint étant situé dans un plan, et le couvercle étant formé parallèlement audit plan de sorte à former un dispositif de contrôle de l'étanchéité pour zone plane.

Ainsi, le dispositif de contrôle est adapté pour effectuer le contrôle de l'étanchéité dans les zones planes de la cuve.

Selon un mode de réalisation, le joint périphérique interne et/ou le joint périphérique externe présente une extrémité de joint formant une boucle tout autour de la chambre interne et destinée à être positionnée contre le composant d'étanchéité, une première partie de l'extrémité de joint étant située dans un premier plan et une deuxième partie de l'extrémité de joint étant située dans un deuxième plan incliné par rapport au premier plan, et le couvercle étant formé dans un plan incliné par rapport au premier plan et au deuxième plan de sorte à former un dispositif de contrôle (4) de l'étanchéité pour zone d'angle

Ainsi, le dispositif de contrôle est adapté pour effectuer le contrôle de l'étanchéité dans les zones d'angle de la cuve. En effet, la forme des joints périphériques permet de suivre l'inclinaison des parois de cuve dans les zones d'angle et ainsi de conserver une chambre interne et une chambre intermédiaire étanche.

D'autre part, comme exposé dans la suite, les dimensions de la boîte selon l'invention sont choisies de telle manière à s'adapter parfaitement aux zones à tester, sans être trop grandes. En effet, il doit être noté ici qu'en particulier dans les zones d'angle, ou en angle, la surface de test est très souvent irrégulière et l'angle réel différent de celui théorie de conception de sorte qu'une boîte aux dimensions trop importantes tiendrait très difficilement le vide nécessaire aux tests d'étanchéité.

Selon un mode de réalisation, le premier plan et le deuxième plan sont inclinés l'un par rapport à l'autre d'un angle compris entre 60 et 170 degrés, de préférence d'un angle égal à 90 degrés, 135 degrés ou à 108,4 degrés ou encore à 161,6 degrés. On peut noter ici que des angles d'inclinaison entre deux faces contiguës relativement fréquents dans le domaine de l'invention, donc pour des cuves de GNL ou GPL, sont typiquement 90° et 135°.

Selon un mode de réalisation, le dispositif de contrôle comporte une dimension longitudinale comprise entre 290 et 432 mm, de préférence égale à 320 mm ou 430 mm, la dimension longitudinale étant destinée à être parallèle à une arête de cuve lors de l'utilisation. Ainsi, en zone standard, c'est-à-dire par exemple les zones planes supérieure et inférieure de la cuve, la dimension longitudinale classique est de 320 mm (millimètre) tandis que pour les zones d'angle, entre deux faces de la cuve, la dimension longitudinale est classiquement de 430 mm.

Ainsi, le dispositif de contrôle a une dimension longitudinale optimale afin de réaliser un contrôle d'étanchéité sur toute une largeur de bande de membrane d'étanchéité tout en passant entre deux blocs isolants primaires préassemblés.

Selon un mode de réalisation, le dispositif de contrôle comporte au moins un dispositif d'éclairage fixé à la cloison périphérique, et configuré pour éclairer la chambre interne.

Ainsi, le dispositif d'éclairage permet d'améliorer la qualité du contrôle d'étanchéité réalisé visuellement en permettant d'identifier plus facilement les éventuelles fuites.

Selon un mode de réalisation, le dispositif de contrôle comporte une pluralité de dispositifs d'éclairage placés tout autour de la chambre interne. Par exemple, l'éclairage est réalisé à l'aide d'un bandeau de LEDs.

Selon un mode de réalisation, le dispositif de contrôle comprend une soupape de sécurité connectée à la chambre intermédiaire et commutable dans un état fermé lorsque la pression dans la chambre intermédiaire est supérieure ou égale à une pression Pmin et un état ouvert lorsque la pression dans la chambre intermédiaire est inférieure à la pression Pmin pour relier la chambre intermédiaire à l'extérieur.

Selon un mode de réalisation, la valeur de Pmin est comprise entre 200 à 1000 mbar, de préférence égale à 800 mbar.

Selon un mode de réalisation, l'invention fournit aussi un procédé de contrôle réalisé à l'aide d'un dispositif de contrôle de l'étanchéité décrit ci-dessus sur un composant d'étanchéité d'une cuve de stockage de fluide, dans lequel le procédé comprend les étapes suivantes :
- appliquer, par exemple par pulvérisation, de l'eau comprenant des tensioactifs, par exemple de l'eau savonneuse, sur une portion à tester du composant d'étanchéité,
- placer le dispositif de contrôle de l'étanchéité sur la portion à tester de sorte que le joint périphérique externe et le joint périphérique interne soient en contact avec la portion à tester,
- mettre en dépression la chambre interne et la chambre intermédiaire, à l'aide du dispositif de mise en dépression,
- observer par le couvercle transparent l'apparition de bulles sur la portion à tester.

Ainsi, en cas de fuite dans la portion à tester, des bulles se forment au niveau de la fuite grâce à la mise en dépression dans la chambre interne. En effet, le gaz rentrant dans la chambre interne pour équilibrer les pressions entre l'extérieur et la chambre interne est piégé par les tensioactifs présents dans l'eau, ce qui forme des bulles au niveau de la fuite.

Selon un mode de réalisation, l'invention fournit aussi un procédé de contrôle réalisé à l'aide d'un dispositif de contrôle de l'étanchéité décrit ci-dessus sur un composant d'étanchéité d'une cuve de stockage de fluide, dans lequel le procédé comprend les étapes suivantes :
- injecter un gaz coloré sous une portion à tester du composant d'étanchéité,
- placer le dispositif de contrôle de l'étanchéité sur la portion à tester de sorte que le joint périphérique externe et le joint périphérique interne soient en contact avec la portion à tester,
- mettre en dépression la chambre interne et la chambre intermédiaire, à l'aide du dispositif de mise en dépression,
- observer par le couvercle transparent l'apparition de gaz coloré dans la chambre interne.

Le procédé selon l'invention est décliné ci-dessus selon un mode d'exécution, en l'espèce en utilisant un « gaz coloré », qui n'est pas illustré dans la suite et qui n'est pas en lien direct avec les problèmes techniques de l'art antérieur tel qu'exposé précédemment, néanmoins ce mode d'exécution est une alternative tout particulièrement adapté/approprié dans le cadre de la présente invention.

On note que l'expression « gaz coloré » renvoie à un gaz non toxique pour un opérateur humain et présentant la particularité d'être visible par ce dernier. A titre d'exemple non limitatif, on peut envisager par exemple de la fumée à base (majoritairement) de noir de carbone ou de préférence de la vapeur d'eau contenant des glycols ou de la glycérine.

Selon un mode de réalisation, lors de l'étape de mise en dépression, la chambre intermédiaire est placée sous une pression P1 inférieure à la pression atmosphérique.

Selon un mode de réalisation, lors de l'étape de mise en dépression, la chambre interne est placée sous une pression P2 inférieure à la pression atmosphérique et supérieure à la pression P1, par exemple à l'aide du régulateur de pression ou de la taille du canal de communication.

Selon un mode de réalisation, l'étape de mise en dépression est réalisée par l'enclenchement de l'organe de commande.

### Brève description des figures

. L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 représente une vue de dessus schématique d'un dispositif de contrôle de l'étanchéité selon le premier mode de réalisation, placé sur une membrane d'étanchéité.
La figure 2 représente une vue schématique en coupe selon la ligne II-II de la figure 1 du dispositif de contrôle de l'étanchéité selon le premier mode de réalisation.
La figure 3 représente une vue schématique en coupe d'un dispositif de contrôle de l'étanchéité selon un deuxième mode de réalisation.
La figure 4 représente une vue schématique en coupe d'un dispositif de contrôle de l'étanchéité selon un troisième mode de réalisation.
La figure 5 représente une vue schématique en coupe d'un dispositif de contrôle de l'étanchéité selon un quatrième mode de réalisation.
La figure 6 représente une vue schématique en coupe d'un dispositif de contrôle de l'étanchéité selon un cinquième mode de réalisation.
La figure 7 représente une vue en perspective d'un dispositif de contrôle de l'étanchéité selon le cinquième mode de réalisation pour zone plane.
La figure 8 représente une vue en perspective d'un dispositif de contrôle de l'étanchéité selon un sixième mode de réalisation pour zone d'angle.
La figure 9 représente une vue partielle d'un dispositif de contrôle de l'étanchéité selon un septième mode de réalisation où est illustrée l'une des poignées de manutention.
La figure 10 représente une vue en perspective partielle d'une structure d'angle de cuve avec le placement schématique d'un dispositif de contrôle de l'étanchéité selon le sixième mode de réalisation.

### Description des modes de réalisation

On va décrire ci-dessous un dispositif de contrôle de l'étanchéité 4 qui peut être utilisé pour détecter des fuites dans un composant d'étanchéité tel qu'une membrane d'étanchéité 1 pour une cuve de stockage de fluide.

Dans l'exemple ci-dessous, la cuve de stockage de fluide est une cuve étanche et thermiquement isolante pour le stockage et/ou le transport de gaz liquéfié. La membrane d'étanchéité 1 est une membrane d'étanchéité réalisée en matériau composite stratifié comprenant une feuille d'aluminium entre deux couches de fibres de verre et de résine. La membrane d'étanchéité 1 comprend une pluralité d'éléments en matériau composite qui sont collés les uns aux autres par recouvrement de sorte à former une zone de chevauchement 3.

Toutefois, l'invention peut également être utilisée dans d'autres types de cuve et pour d'autres types de membranes d'étanchéité. Par exemple, la membrane d'étanchéité pourrait être une membrane métallique comprenant une pluralité d'éléments soudés les uns aux autres.

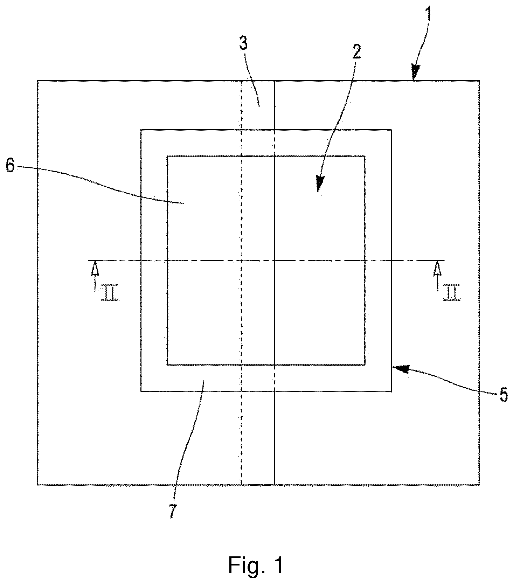

Pendant l'étape du test d'étanchéité permettant de vérifier l'étanchéité de la membrane 1, on place le dispositif de contrôle de l'étanchéité 4 sur une portion à tester 2 de la membrane 1. Cette portion à tester 2 peut se situer à l'emplacement d'une zone de chevauchement 3 comme illustrée sur les figures 1 à 5, notamment sur la figure 1, ou tout autre zone de la membrane d'étanchéité 1.

Le dispositif de contrôle de l'étanchéité 4 comporte une boîté 5 comprenant une cloison périphérique 7 et un couvercle 6 transparent dans le domaine du visible pour permettre l'observation de la portion à tester 2 au travers le couvercle 6 par un utilisateur. Le couvercle 6 est relié à la cloison périphérique 7 sur chacun de ses bords de sorte à former avec la cloison périphérique 7 une chambre interne 13 étanche.

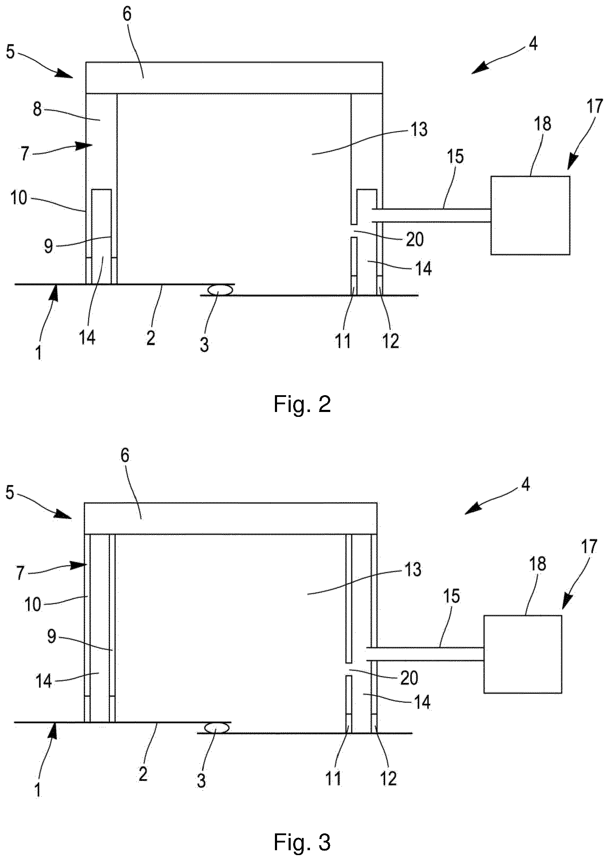

Les figures 1 et 2 représentent un premier mode de réalisation du dispositif de contrôle de l'étanchéité 4. Comme représenté sur la figure 1 où seule la boîte 5 du dispositif de contrôle 4 est illustrée avec la membrane 1, le couvercle 6 est de forme rectangulaire et la cloison périphérique 7, également de forme rectangulaire, est fixée sur chacun des quatre bords du couvercle 6 de sorte à former une boîte 5 parallélépipédique rectangle. Toutefois, dans des modes de réalisation non représentés, la boîte 5 peut avoir toute forme adaptée à la portion à tester 2 de la membrane, par exemple une forme allongée, une forme polygonale ou une forme cylindrique, la cloison périphérique 7 s'adaptant à la forme du couvercle 6.

La figure 2 représente également le premier mode de réalisation du dispositif de contrôle 4. Dans ce mode de réalisation, la cloison périphérique 7 comprend une portion supérieure 8, une paroi périphérique interne 9 et une paroi périphérique externe 10. La paroi périphérique interne 9 présente une extrémité inférieure équipée d'un joint périphérique interne 11 destiné à être positionné contre la membrane 1 tout autour de la chambre interne 13. La paroi périphérique interne 9 présente également une extrémité supérieure reliée de manière étanche à une extrémité inférieure de la portion supérieure 8. La portion supérieure 8 est reliée de manière étanche par une extrémité supérieure au couvercle 6.

Ainsi, l'ensemble formé par la portion à tester 2, le joint interne 11, la paroi interne 9, la portion supérieur 8 et le couvercle 6 forme toutes les parois de la chambre interne 13 permettant à celle-ci d'être sensiblement étanche lors d'un test d'étanchéité, hors fuite éventuelle de la portion à tester 2 de la membrane 1 ou raccordement à un dispositif de mise en dépression 17.

La cloison périphérique 7 comporte en outre une paroi périphérique externe 10 disposée à l'extérieur de la paroi périphérique interne 9 et espacée de celle-ci. La paroi périphérique externe 10 présente une extrémité inférieure équipée d'un joint périphérique externe 12 destiné à être positionné contre la membrane 1 tout autour du joint périphérique interne 11. La paroi périphérique externe 10 présente également une extrémité supérieure reliée de manière étanche à l'extrémité inférieure de la portion supérieure 8.

Ainsi, l'ensemble formé par la membrane 1, le joint externe 12, la paroi périphérique externe 10, la portion supérieure 8, la paroi périphérique interne 9, et le joint interne 11 forme toutes les parois d'une chambre intermédiaire 14 permettant à celle-ci d'être étanche lors d'un test d'étanchéité, hors fuite éventuelle de la membrane 1, raccordement à un dispositif de mise en dépression 17 ou à la chambre interne 13.

Dans le premier mode de réalisation représenté figure 2, la chambre interne 13 est reliée de manière fluidique à la chambre intermédiaire 14 par au moins un canal de communication 20 réalisé dans la paroi périphérique interne 9.

Le dispositif de contrôle 4 comprend également un dispositif de mise en dépression 17 qui comporte un premier, et unique dans ce mode de réalisation, organe de mise en dépression 18 raccordé à la chambre intermédiaire 14 par un premier tuyau 15. Le premier tuyau 15 traverse ainsi la paroi périphérique externe 10 afin de permettre la mise en dépression de la chambre intermédiaire 14 par le premier organe de mise en dépression 18. Dans ce mode de réalisation, la chambre interne 13 est également mise en dépression à l'aide du canal de communication 20 entre la chambre interne 13 et la chambre intermédiaire 14, et à l'aide du premier organe de mise en dépression 18.

De plus, dans ce mode de réalisation, la dimension du canal de communication 20 par rapport au volume de la chambre interne 13 et au volume de la chambre intermédiaire 14 est choisi de manière à ralentir l'équilibrage des pressions entre la chambre interne 13 et la chambre intermédiaire 14 lorsque le dispositif de mise en dépression 17 est actionné. Ainsi, la dimension du canal de communication permet d'obtenir une dépression plus importante dans la chambre intermédiaire 14 que dans la chambre interne pendant une durée donnée lors d'un test d'étanchéité de sorte à améliorer la fiabilité du test. De manière avantageuse, le canal de communication est dimensionné de manière à générer une perte de débit supérieure ou égale au débit de la fuite. Ainsi, à titre d'exemple, ce canal de communication peut présenter un diamètre compris entre 0,1 et quelques millimètres, en fonction de la taille des fuites auxquels on peut raisonnablement s'attendre compte tenu du ou des composants d'étanchéité testés.

La figure 3 représente un deuxième mode de réalisation du dispositif de contrôle 4. Ce deuxième mode de réalisation diffère du premier mode de réalisation en ce que la cloison périphérique 7 ne comprend pas de portion supérieure 8. En effet, comme visible sur la figure 3, dans ce mode de réalisation, la cloison périphérique 7 comprend une paroi périphérique interne 9 présentant une extrémité inférieure équipée d'un joint périphérique interne 11 et une extrémité supérieure qui est cette fois directement fixée au couvercle 6. De la même manière, la cloison périphérique 7 comprend une paroi périphérique externe 10 disposée à l'extérieur de la paroi périphérique interne 9 et espacée de celle-ci. La paroi périphérique externe présente une extrémité inférieure équipée d'un joint périphérique externe 12 et une extrémité supérieure qui est cette fois directement fixée au couvercle 6.

Dans ce mode de réalisation, la chambre interne 13 est donc délimitée par la portion à tester 2, la paroi périphérique interne 9, et le couvercle 6. De plus, la chambre intermédiaire 14 est délimitée par la membrane 1, le joint externe 12, la paroi externe 10, le couvercle 6, la paroi interne et le joint interne 11.

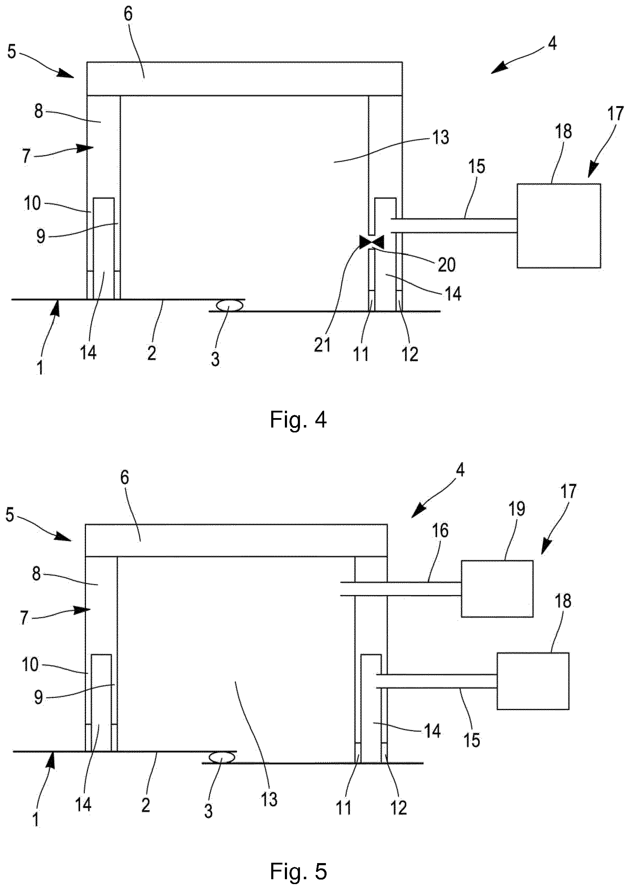

La figure 4 représente un troisième mode de réalisation du dispositif de contrôle 4. Ce troisième mode de réalisation est très similaire au premier mode de réalisation de la figure 2. Ce mode de réalisation diffère du premier mode de réalisation seulement en ce qu'un régulateur de pression 21 est placé dans le canal de communication 20.

Le régulateur de pression 21 est dans ce mode de réalisation, une soupape configurée pour assurer une différence de pression entre la chambre interne 13 et la chambre intermédiaire 14. En effet, par exemple, si l'on souhaite avoir une pression P2 dans la chambre interne 13 qui est supérieure à une pression P1 dans la chambre intermédiaire 14, le régulateur de pression 21 peut être configuré pour laisser ouvert la communication fluidique entre la chambre interne 13 et la chambre intermédiaire 14 tant que la pression de la chambre interne 13 n'a pas atteint la pression P1 puis fermer la communication fluidique dès que la valeur P1 est atteinte. En effet, l'organe de mise en dépression 18 étant raccordé à la chambre intermédiaire 14, celui-ci peut continuer à mettre en dépression la chambre intermédiaire 14 à une pression inférieure à la pression P1.

La figure 5 représente un quatrième mode de réalisation du dispositif de contrôle 4. Ce mode de réalisation est très similaire au premier mode de réalisation. Toutefois, le quatrième mode de réalisation diffère du premier mode de réalisation en ce que la chambre interne 13 n'est pas reliée à la chambre intermédiaire par un canal de communication 20. En effet, dans ce mode de réalisation, la chambre interne 13 et la chambre intermédiaire 14 sont indépendantes l'une de l'autre de sorte qu'il est possible de les relier chacune au dispositif de mise en dépression 17 indépendamment.

Comme illustré à la figure 5, le dispositif de mise en dépression 17 comprend ici un premier organe de mise en dépression 18 et un deuxième organe de mise en dépression 19. Comme dans les précédents modes de réalisation, le premier organe de mise en dépression 18 est raccordé à la chambre intermédiaire 14 par un premier tuyau 15 traversant la paroi externe 10. Le deuxième organe de mise en dépression 19 est raccordé à la chambre interne 13 par un deuxième tuyau 16 traversant la portion supérieure 8.

Ainsi, dans ce mode de réalisation, il est possible de placer à une pression P1 la chambre intermédiaire 14 à l'aide du premier organe de mise en dépression 18 et de placer à une pression P2 différente de la pression P1 la chambre interne 13 à l'aide du deuxième organe de mise en dépression 18.

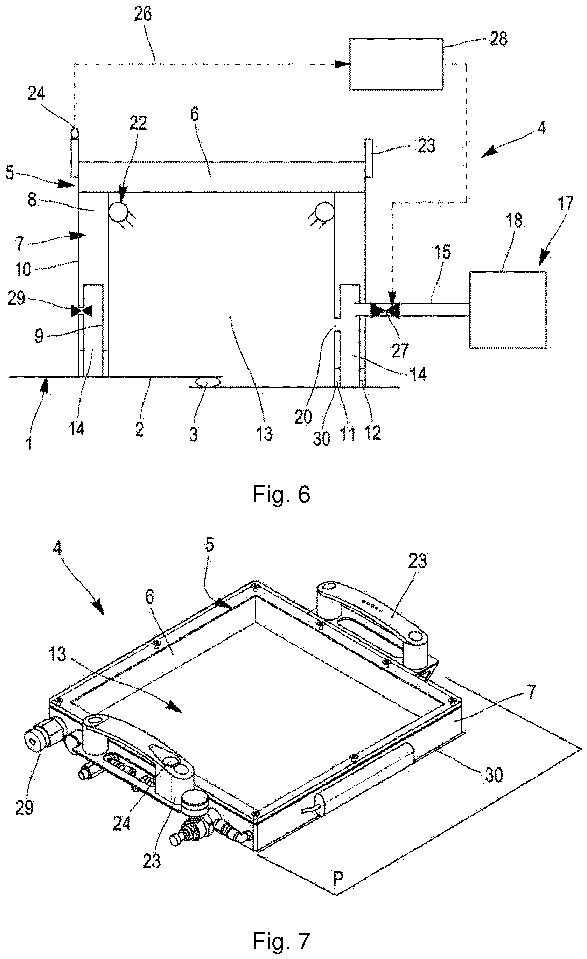

Les figures 6 et 7 représentent un cinquième mode de réalisation du dispositif de contrôle 4. Dans ce mode de réalisation, la boite 5 comporte deux poignées de manutention 23 qui sont fixées sur la cloison périphérique 7 à proximité du couvercle 6. Les deux poignées de manutention sont positionnées à l'opposé l'une de l'autre pour permettre à un utilisateur d'agripper le dispositif de contrôle 4 avec ses deux mains et de positionner le dispositif de contrôle sur la portion à tester 2 aisément. Par exemple sur la figure 3, les poignées de manutention 23 sont fixées à l'aide d'une équerre sur la paroi périphérique externe 10. Les poignées de manutention 23 sont tournées à l'opposé des joints périphériques 11, 12.

Dans le mode de réalisation illustré sur ces figures 6 et 7, l'une des poignées de manutention 23 est équipée d'un organe de commande 24, ici un bouton poussoir, actionnable par la main de l'utilisateur tenant la poignée 23 pour produire un signal de commande 26. Dans ce mode de réalisation, l'organe de commande 24 est directement situé sur la poignée 23. Ce signal de commande 26 est transmis à une unité de commande 28. L'unité de commande 28 est configurée pour en réponse à ce signal de commande 26 commuter une vanne commandée 27 située au niveau du dispositif de mise en dépression afin de faire passer cette vanne 27 d'un état ouvert à un état fermé et réciproquement.

Dans l'état ouvert, la vanne commandée 27 permet la communication fluidique de la chambre interne 13 et la chambre intermédiaire 14 avec l'organe de mise en dépression 18. Dans l'état fermé, la vanne commandée 27 isole la chambre interne 13 et la chambre intermédiaire 14 de l'organe de mise en dépression 18.

Des organes de commande présentant une autre forme qu'une bouton poussoir peuvent être envisagées alternativement, par exemple un bouton tactile capacitif, un levier basculant, ou tout autre organe actionnable manuellement.

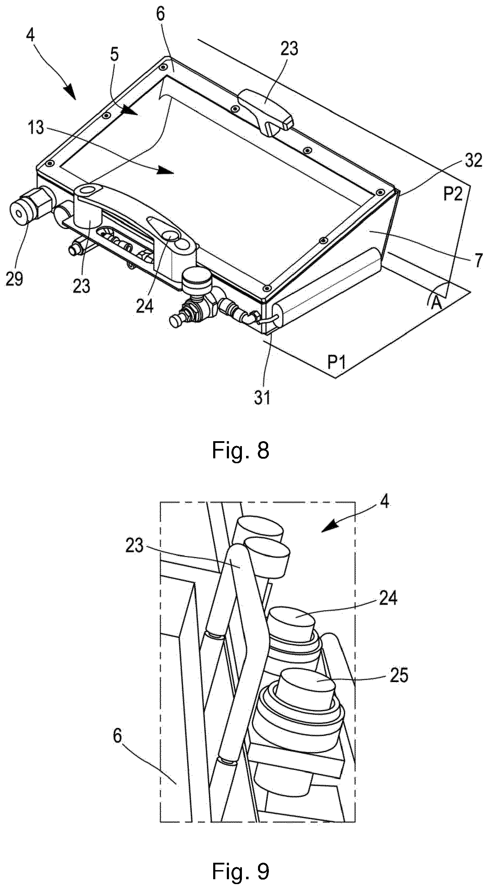

Dans un septième mode de réalisation illustré en figure 9, le dispositif de contrôle 4 comprend un premier organe de commande 24 actionnable manuellement pour produire un premier signal de commande 26 et le dispositif de contrôle 4 comporte en outre un deuxième organe de commande 25 actionnable manuellement pour produire un deuxième signal de commande 26. L'unité de commande 28 est ainsi ici configurée pour commuter la vanne commandée 27 dans l'état ouvert en réponse au premier signal de commande 26 venant du premier organe de commande 24 et dans l'état fermé en réponse au deuxième signal de commande 26 venant du deuxième organe de commande 25. De plus, dans ce mode de réalisation, les organes de commande 24, 25 ne sont pas situés sur la poignée de manutention 23 mais à proximité immédiate de celle-ci de sorte à être actionnable par une main d'un utilisateur tenant la poignée de manutention 23.

En revenant au cinquième mode de réalisation, le dispositif de contrôle 4 comporte également une pluralité de dispositifs d'éclairage 22 visibles sur la figure 6 qui sont positionnés sur la paroi périphérique interne 9 de sorte à éclairer la chambre interne 13.

Le dispositif de contrôle 4 comporte de plus une soupape de sécurité 29 illustrée sur les figures 6 et 7 connectée à la chambre intermédiaire 14 et commutable dans un état fermé lorsque la pression dans la chambre intermédiaire 14 est supérieure ou égale à une pression Pmin et un état ouvert lorsque la pression dans la chambre intermédiaire 14 est inférieure à la pression Pmin pour relier la chambre intermédiaire 14 à l'extérieur. Ainsi, la soupape de sécurité 29 prévient la formation d'un vide trop important et non nécessaire pour le contrôle dans la chambre intermédiaire 14 et a fortiori dans la chambre interne 13 permettant d'éviter tout endommagement du dispositif de contrôle 4 ou décollement de la membrane 1.

Le cinquième mode de réalisation illustré sur les figures 6 et 7 présente un dispositif de contrôle 4 pour zone de test plane. En effet, les joints périphériques interne et externe 11, 12 présentent une extrémité de joint 30 formant une boucle tout autour de la chambre interne 13 et destinée à être positionnée contre la portion à tester 2, de sorte que l'extrémité de joint 30 est situé dans un plan P. Le couvercle est formé parallèlement au plan P. Ainsi, la boite 5 du dispositif de contrôle a la forme d'un parallélépipède rectangle sans paroi de fond, la paroi de fond étant réalisée par la portion à tester 2. Ainsi, le dispositif de contrôle 4 est adapté pour effectuer le contrôle de l'étanchéité dans les zones planes de la cuve.

Le sixième mode de réalisation, illustré en figure 8, présente un dispositif de contrôle pour zone de test en angle.

Dans ce mode de réalisation, le joints périphérique interne 11 et le joint périphérique externe 12 présentent une extrémité de joint 30 formant une boucle tout autour de la chambre interne et destinée à être positionnée contre le composant d'étanchéité. Cette extrémité de joint 30 comprend une première partie 31 située dans un premier plan P1 et une deuxième partie 32 reliée à la première partie 31 et située dans un deuxième plan P2 incliné par rapport au premier plan P1 d'un angle A correspondant à l'angle de la cuve à épouser. De plus, le couvercle 6 est ici formé dans un plan incliné par rapport au premier plan P1 et au deuxième plan P2. Ainsi, la boite 5 du dispositif de contrôle 4 de ce mode de réalisation a la forme d'un prisme ayant pour base un quadrilatère, dont l'un des angles correspond à l'angle de la cuve, où deux parois latérales sont manquantes, les deux parois latérales étant formées par la portion à tester 2 en forme d'angle. De plus, afin de faciliter le positionnement du dispositif de contrôle 4 dans l'angle de la cuve, l'une des poignées 23 est réalisée en forme de U inversé tandis que l'autre poignée 23 est réalisée en forme de T.

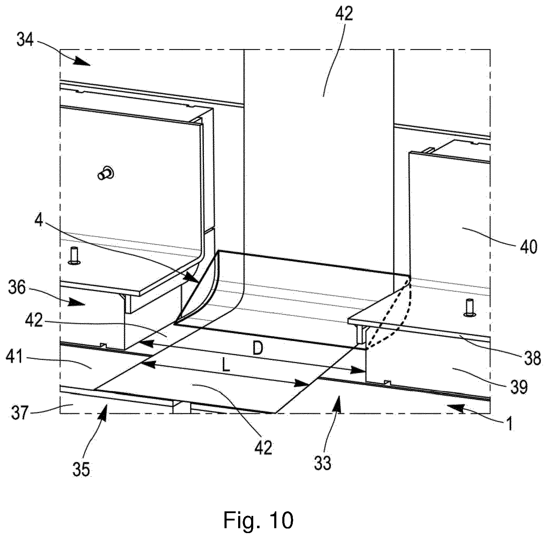

Une cuve étanche et thermiquement isolante comprend une pluralité de parois 33, 34 formées chacune d'au moins une barrière thermiquement isolante et d'au moins une membrane d'étanchéité. Dans un angle d'une cuve étanche et thermiquement isolante à la jonction entre deux parois 33, 34, une structure d'angle est placée afin d'assurer la continuité de la barrière thermiquement isolante et de la membrane d'étanchéité des deux parois 33, 34. Une telle structure d'angle est représentée en figure 10. Dans la présente invention, les parois de cuve 33, 34 comprennent une barrière thermiquement isolante secondaire 35, une membrane d'étanchéité secondaire 1, correspondant à la membrane à tester, supportée par la barrière thermiquement isolante secondaire 35, une barrière thermiquement isolante primaire 36 fixée à la membrane d'étanchéité secondaire 1 et une membrane d'étanchéité primaire (non représentée) supportée par la barrière thermiquement isolante primaire 36.

Ainsi, la structure d'angle comprend des éléments formant une partie de la barrière thermiquement isolante secondaire 35, des éléments formant une partie de la membrane d'étanchéité secondaire 1 et des éléments formant une partie de la barrière thermiquement isolante primaire 36. Par conséquent, la structure d'angle permet d'assurer la continuité des différentes barrières thermiquement isolantes et membranes d'étanchéité à la jonction entre une première paroi de cuve 33 et une deuxième paroi de cuve 34 inclinée par rapport à la première paroi de cuve 33 d'un angle déterminée, par exemple un angle de 90°.

La structure d'angle illustrée en figure 10 est composée ainsi :
- d'une rangée de panneaux isolants secondaires 37 de la première paroi 33 et d'une rangée de panneaux isolants secondaires 37 d'une deuxième paroi 34 qui sont fixés à la structure porteuse (non représentée),
- de feuilles étanches rigides 41 collées sur les panneaux isolants secondaires 37,
- de feuilles étanches souples 42 venant faire la jonction entre deux feuilles étanches rigides 41 adjacentes que ce soit au niveau de panneaux isolants secondaires d'une même paroi ou de parois différentes, comme illustré en figure 5,
- d'une rangée de panneaux isolants primaires d'angle 38 fixés aux feuilles étanches rigides 41, les panneaux isolants primaires d'angle 38 étant composés d'un bloc isolant primaire 39 de la première paroi de cuve 33 et d'un bloc isolant primaire 39 de la deuxième paroi de cuve 34 qui sont fixés l'un à l'autre à l'aide d'une cornière 40.

C'est au niveau des feuilles étanches souples 42 que le risque de fuite est le plus élevé notamment à la pliure formée pour suivre l'inclinaison entre la première paroi de cuve 33 et la deuxième paroi de cuve 34. C'est pourquoi il est avantageux que le dispositif de contrôle 4 puisse être placé au plus près de l'angle de la structure d'angle. Le dispositif de contrôle 4 a été illustré de manière schématique et en situation sur la figure 6.

Au niveau de l'espacement entre deux panneaux isolants secondaires 37 adjacents d'une même paroi de cuve, les deux blocs isolants primaires d'angle 38 sont espacés l'un de l'autre d'une distance D dans la direction de l'arête de cuve formée par l'intersection des deux parois de cuve 33, 34. Le dispositif de contrôle 4 présente ainsi avantageusement une dimension longitudinale dans la direction de l'arête de cuve inférieure à cette distance D. Dans un exemple de réalisation, cette distance D est égale à 322 mm.

De plus, la feuille étanche souple 42 située entre deux panneaux isolants secondaires 37 adjacents d'une même paroi de cuve a une largeur L dans la direction de l'arête. Afin de minimiser le nombre de contrôle à effectuer, il est avantageux que le dispositif de contrôle 4 présente une dimension longitudinale dans la direction de l'arête de cuve supérieure à cette largeur L, comme représenté sur la figure 10.

## Revendications

1. Dispositif de contrôle (4) de l'étanchéité d'un composant d'étanchéité, tel qu'une membrane (1) ou un multicouche, pour une cuve de stockage de fluide, dans lequel le dispositif de contrôle (4) comporte une boîte (5) comprenant :
- une cloison périphérique (7),
- un couvercle (6) réalisé dans un matériau transparent, le couvercle (6) étant relié à la cloison périphérique (7) de telle sorte que le couvercle (6) et la cloison périphérique (7) soient aptes à définir, avec le composant d'étanchéité (1), une chambre interne (13),
la cloison périphérique (7) comportant :
- une paroi périphérique interne (9) présentant une extrémité inférieure équipée d'un joint périphérique interne (11) destiné à être positionné contre le composant d'étanchéité (1) tout autour de la chambre interne (13) ; - un dispositif de mise en dépression (17) qui est raccordé à la chambre interne (13) et est configuré pour mettre en dépression ladite chambre interne (13), ledit dispositif de contrôle étant **caractérisé en ce que** la cloison périphérique (7) comporte en outre une paroi périphérique externe (10) disposée à l'extérieur de la paroi périphérique interne (9) de manière à définir, entre la paroi périphérique externe (10) et la paroi périphérique interne (9) une chambre intermédiaire (14) s'étendant exclusivement dans la cloison périphérique (7) tout autour de la chambre interne (13), la paroi externe périphérique présentant une extrémité inférieure équipée d'un joint périphérique externe (12) destiné à être positionné contre le composant d'étanchéité (1) tout autour du joint périphérique interne (11) ;
le dispositif de mise en dépression (17) étant en outre raccordé à la chambre intermédiaire (14) et configuré pour mettre en dépression ladite chambre intermédiaire (14)
le dispositif de contrôle (4) comprenant un tuyau (15) d'évacuation d'air qui est raccordé, d'une part, à un organe de mise en dépression (18) du dispositif de mise en dépression (17) et, d'autre part, à la chambre intermédiaire (14) de manière à placer la chambre intermédiaire (14) sous une pression P1 inférieure à la pression atmosphérique,
la paroi périphérique interne (9) comprenant un canal de communication (20) reliant de manière fluidique la chambre interne (13) et la chambre intermédiaire (14).

2. Dispositif de contrôle (4) selon la revendication 1, dans lequel la cloison périphérique (7) comporte une portion supérieure (8) reliant la paroi périphérique externe (10) et la paroi périphérique interne (9) au couvercle (6) et recouvrant de manière étanche la chambre intermédiaire (14).

3. Dispositif de contrôle (4) selon la revendication 2, dans lequel le ratio entre une hauteur de la paroi périphérique interne (9) et une hauteur de la cloison périphérique (7) est compris entre 5 et 70%, de préférence entre 15% et 50%.

4. Dispositif de contrôle (4) selon l'une des revendications 1 à 3, dans lequel le dispositif de contrôle (4) comprend un régulateur de pression (21) placé au niveau du canal de communication (20), ledit régulateur de pression (21) étant configuré pour que, lors de la mise en fonctionnement du dispositif de mise en dépression (17), la chambre interne (13) soit placée à une pression P2 inférieure à la pression atmosphérique et supérieure à la pression P1.

5. Dispositif de contrôle (4) selon l'une des revendications 1 à 4, dans lequel le dispositif de contrôle (4) comprend :
- une poignée de manutention (23) fixée à la boîte (5) ;
- un organe de commande (24) actionnable manuellement pour produire un signal de commande (25), l'organe de commande (24) étant positionné sur ou à proximité immédiate de la poignée de manutention (23) de sorte à être actionnable par une main d'un utilisateur tenant la poignée de manutention (23),
et dans lequel le dispositif de mise en dépression (17) comprend une vanne commandée (27) commutable dans un état ouvert pour relier la chambre interne (13) et la chambre intermédiaire (14) à l'organe de mise en dépression (18) et un état fermé pour isoler la chambre interne (13) et la chambre intermédiaire (14) de l'organe de mise en dépression (18), le dispositif de contrôle (4) comprenant une unité de commande (28) configurée pour commuter la vanne commandée (27) en réponse au signal de commande (26).

6. Dispositif de contrôle (4) selon la revendication 5, dans lequel l'unité de commande (28) est configurée pour commuter la vanne commandée (27) alternativement entre l'état ouvert et l'état fermé en réponse au signal de commande.

7. Dispositif de contrôle (4) selon la revendication 5, dans lequel l'organe de commande est un premier organe de commande (24) actionnable manuellement pour produire un premier signal de commande et le dispositif de contrôle comporte en outre un deuxième organe de commande (25) actionnable manuellement pour produire un deuxième signal de commande, l'unité de commande (28) étant configurée pour commuter la vanne commandée (27) dans l'état ouvert en réponse au premier signal de commande et dans l'état fermé en réponse au deuxième signal de commande.

8. Dispositif de contrôle (4) selon la revendication 7, dans lequel la poignée de manutention est une première poignée de manutention (23) et le dispositif de contrôle (4) comporte en outre une deuxième poignée de manutention (23), la première poignée de manutention et la deuxième poignée de manutention (23) étant disposées sur le pourtour de la boite (5) à l'opposé l'une de l'autre.

9. Dispositif de contrôle (4) selon l'une des revendications 1 à 8, dans lequel le joint périphérique interne (11) et/ou le joint périphérique externe (12) présente une extrémité de joint (30) formant une boucle tout autour de la chambre interne (13) et destinée à être positionnée contre le composant d'étanchéité (1), l'extrémité de joint (30) tout autour de la chambre interne étant situé dans un plan, et le couvercle étant formé parallèlement audit plan de sorte à former un dispositif de contrôle (4) de l'étanchéité pour zone plane.

10. Dispositif de contrôle (4) selon l'une des revendications 1 à 8, dans lequel le joint périphérique interne (11) et/ou le joint périphérique externe (12) présente une extrémité de joint (30) formant une boucle tout autour de la chambre interne et destinée à être positionnée contre le composant d'étanchéité (1), une première partie (31) de l'extrémité de joint étant située dans un premier plan P1 et une deuxième partie (32) de l'extrémité de joint étant située dans un deuxième plan P2 incliné par rapport au premier plan, et le couvercle étant formé dans un plan incliné par rapport au premier plan et au deuxième plan de sorte à former un dispositif de contrôle (4) de l'étanchéité pour zone d'angle.

11. Dispositif de contrôle (4) selon la revendication 10, dans lequel le dispositif de contrôle comporte une dimension longitudinale comprise entre 290 et 432 mm, de préférence égale à 320 mm ou 430 mm, la dimension longitudinale étant destinée à être parallèle à une arête de cuve lors de l'utilisation.

12. Dispositif de contrôle (4) selon l'une des revendications 1 à 11, dans lequel le dispositif de contrôle (4) comporte au moins un dispositif d'éclairage (22) fixé à la cloison périphérique (7) et configuré pour éclairer la chambre interne (13).

13. Dispositif de contrôle (4) selon l'une des revendications 1 à 11, dans lequel le dispositif de contrôle (4) comprend une soupape de sécurité (29) connectée à la chambre intermédiaire (14) et commutable dans un état fermé lorsque la pression dans la chambre intermédiaire (14) est supérieure ou égale à une pression Pmin et un état ouvert lorsque la pression dans la chambre intermédiaire (14) est inférieure à la pression Pmin pour relier la chambre intermédiaire (14) à l'extérieur

14. Procédé de contrôle réalisé à l'aide d'un dispositif de contrôle (4) de l'étanchéité selon l'une quelconque des revendications précédentes sur un composant d'étanchéité (1) d'une cuve de stockage de fluide, dans lequel le procédé comprend les étapes suivantes :
- appliquer de l'eau comprenant des tensioactifs ou injecter un gaz coloré, respectivement sur ou sous une portion à tester (2) du composant d'étanchéité (1),
- placer le dispositif de contrôle (4) de l'étanchéité sur la portion à tester (2) de sorte que le joint périphérique externe (12) et le joint périphérique interne (11) soient en contact avec la portion à tester (2),
- mettre en dépression la chambre interne (13) et la chambre intermédiaire (14) au moyen du dispositif de mise en dépression (17),
- observer par le couvercle (6) transparent l'apparition respectivement de bulles sur la portion à tester (2) ou de gaz coloré dans la chambre interne (13).

15. Procédé de contrôle selon la revendication 14, dans lequel lors de l'étape de mise en dépression, la chambre intermédiaire (14) est placée sous une pression P1 inférieure à la pression atmosphérique.

16. Procédé de contrôle selon la revendication 15, dans lequel lors de l'étape de mise en dépression, la chambre interne (13) est placée sous une pression P2 inférieure à la pression atmosphérique et supérieure à la pression P1.

17. Procédé de contrôle selon l'une des revendications 14 à 16 d'un dispositif de contrôle (4) de l'étanchéité selon la revendication 5, dans lequel l'étape de mise en dépression est réalisée par l'enclenchement de l'organe de commande (24).

## Patentansprüche

1. Kontrollvorrichtung (4) zur Dichtigkeitskontrolle eines Dichtungselementes, wie eine Membran (1) oder eine Mehrschicht, für einen Flüssigkeitsspeichertank, wobei die Kontrollvorrichtung (4) einen Behälter (5) umfasst, welcher umfasst:
- eine umlaufende Trennwand (7),
- eine Abdeckung (6) aus einem transparenten Material, wobei die Abdeckung (6) mit der peripheren Trennwand (7) so verbunden ist, dass die Abdeckung (6) und die periphere Wand (7) geeignet sind, zusammen mit dem Dichtungsbauteil (1) eine Innenkammer (13) zu definieren,
wobei die umlaufende Wand umfasst:
- eine innere umlaufende Wand (9) mit einem inneren Ende, das mit einer inneren umlaufenden Dichtung (11) ausgestattet ist, die dazu bestimmt ist, gegen das Dichtungselement (1) rund um die Innenkammer (13) positioniert zu werden; - eine Unterdruckvorrichtung (17), die mit der inneren Kammer (13) verbunden ist und konfiguriert ist, um die Innenkammer (13) in Unterdruck zu setzen, wobei Kontrollvorrichtung **dadurch gekennzeichnet ist, dass** die umlaufende Trennwand (7) weiterhin eine äußere umlaufende Wand (10) aufweist, die außerhalb der inneren umlaufenden Wand (9) angeordnet ist, um zwischen der äußeren umlaufenden Wand (10) und der inneren umlaufenden Wand (9) eine Zwischenkammer (14) zu definieren, die sich ausschließlich in der umlaufenden Trennwand (7) um die Innenkammer (13) herum erstreckt, wobei die äu-ßere umlaufende Wand ein unteres Ende aufweist, das mit einer äußeren umlaufenden Dichtung (12) ausgestattet ist, die dazu bestimmt ist, an dem Dichtungselement (1) um die innere umlaufende Dichtung (11) herum angeordnet zu sein;
wobei die Unterdruckvorrichtung (17) weiterhin verbunden ist mit der Zwischenkammer (14) und konfiguriert ist, um die Zwischenkammer (14) in Unterdruck zu setzen wobei die Kontrollvorrichtung (4) ein Abluftrohr (15) umfasst, welches zum einen mit einem Unterdruckorgan (18) der Unterdruckvorrichtung (17) und zum anderen mit der Zwischenkammer (14) verbunden ist, so dass die Zwischenkammer in einen Druck P1, welcher niedriger als der atmosphärische Druck ist, gesetzt wird,
wobei die innere umlaufende Wand (9) einen Verbindungskanal (2) umfasst, der die Innenkammer (13) mit der Zwischenkammer (14) fluidisch verbindet.

2. Kontrollvorrichtung (4) gemäß Anspruch 1, wobei die umlaufende Trennwand (7) einen oberen Teil (8) umfasst, welcher die umlaufende äußere Wand (10) und die umlaufende innere Wand (9) mit der Abdeckung (9) verbindet und in dichter Weise die Zwischenkammer (14) abdeckt.

3. Kontrollvorrichtung (4) gemäß Anspruch 2, wobei das Verhältnis zwischen einer Höhe der inneren umlaufenden Wand (8) und einer Höhe der umlaufenden Trennwand (7) zwischen 5 und 70% ist, vorzugsweise zwischen 15% und 50%.

4. Kontrollvorrichtung (4) gemäß einem der Ansprüche 1 bis 3, wobei die Kontrollvorrichtung (4) einen Druckregler (21) umfasst, welcher auf Höhe des Verbindungskanals (20) angeordnet ist, wobei der Druckregler (21) so konfiguriert ist, dass bei der Inbetriebnahme der Unterdruckvorrichtung (17) die Innenkammer (13) in einen Druck P2, welcher niedriger als der atmosphärische Druck und höher als der Druck P 1 ist, gesetzt wird.

5. Kontrollvorrichtung (4) gemäß einem der Ansprüche 1 bis 4, wobei die Kontrollvorrichtung umfasst:
- einen an dem Behälter (5) befestigten Tragegriff (23);
- ein Steuerorgan (24), welches manuell betätigbar ist, um ein Steuersignal (25) zu erzeugen, wobei das Steuerorgan (24) auf oder in unmittelbarer Nähe des Tragegriffes (23) angeordnet ist, so dass es von der Hand eines Benutzers, der den Tragegriff (23) festhält, benutzt werden kann,
und wobei die Unterdruckvorrichtung (17) ein gesteuertes Ventil (27), das schaltbar ist in einen offenen Zustand, um die Innenkammer (13) und die Zwischenkammer (14) mit dem Unterdruckorgan (18) zu verbinden, und in einen geschlossenen Zustand, um die Innenkammer (13) und die Zwischenkammer (14) vom Unterdruckorgan(18) zu isolieren, umfasst, wobei die Kontrollvorrichtung (4) eine Steuereinheit (28) umfasst, welche konfiguriert ist, um das gesteuerte Ventil (27) als Antwort auf das Steuersignal (26) zu schalten.

6. Kontrollvorrichtung gemäß Anspruch 5, wobei die Steuereinheit (28) konfiguriert ist, um das steuerbare Ventil (27) wechselweise zwischen dem offen Zustand und dem geschlossenen Zustand als Antwort auf das Steuersignal zu schalten.

7. Kontrollvorrichtung gemäß Anspruch 5, wobei das Steuerorgan ein erstes Steuerorgan ist, welches manuell betätigbar ist, um ein erstes Steuersignal zu erzeugen und wobei die Kontrollvorrichtung weiterhin ein zweites Steuerorgan (25) umfasst, welches manuell betätigbar ist, um ein zweites Steuersignal zu erzeugen, wobei die Steuereinheit (28) konfiguriert ist, um das gesteuerte Ventil (27) in den offenen Zustand als Antwort auf das erste Steuersignal und in den geschlossenen Zustand als Antwort auf das zweite Steuersignal zu schalten.

8. Kontrollvorrichtung (4) gemäß Anspruch 7, wobei der Tragegriff ein erster Tragegriff (23) ist und die Kontrollvorrichtung (4) weiterhin einen zweiten Tragegriff (23) umfasst, wobei der erste Tragegriff und der zweite Tragegriff (23) auf der Umrandung des Behälters (5) gegenüberliegend angeordnet sind.

9. Kontrollvorrichtung gemäß einem der Ansprüche 1 bis 8, wobei die innere umlaufende Dichtung (11) und/oder die äußere umlaufende Dichtung (12) ein Ende der Dichtung (30) aufweisen, welches eine Schlaufe um die Innenkammer (13) bildet und dazu bestimmt ist, gegen das Dichtungselement (1) angeordnet zu sein, wobei das Ende der um die Innenkammer umlaufenden Dichtung (30) auf einer Ebene angeordnet ist, und wobei die Abdeckung parallel zur Ebene gebildet ist, so dass sie eine Kontrollvorrichtung (4) zur Dichtigkeitskontrolle eines planen Bereiches bildet.

10. Kontrollvorrichtung (4) gemäß einem der Ansprüche 1 bis 8, wobei die innere umlaufende Dichtung (11) und/oder die äußere umlaufende Dichtung (12) ein Ende der Dichtung (30) aufweisen, welches eine Schlaufe um die Innenkammer (13) bildet und dazu bestimmt ist, gegen das Dichtungselement (1) angeordnet zu sein, wobei ein erster Teil (31) des Endes der Dichtung in einer ersten Ebene P1 angeordnet ist und ein zweiter Teil (32) des Endes der Dichtung in einer zweiten Ebene P2, welche im Verhältnis zur ersten Ebene geneigt ist, und wobei die Abdeckung in einer geneigten Ebene im Verhältnis zur ersten Ebene und zur zweiten Ebene gebildet ist, so dass sie eine Kontrollvorrichtung (4) zur Dichtigkeitskontrolle eines Winkelbereiches bildet.

11. Kontrollvorrichtung (4) gemäß Anspruch 10, wobei die Kontrollvorrichtung eine Längsabmessung zwischen 290 und 432 mm, vorzugsweise 320 mm oder 430 mm, hat, wobei die Längsabmessung dazu bestimmt ist, parallel zu einer Kante des Tankes zu sein.

12. Kontrollvorrichtung (4) gemäß einem der Ansprüche 1 bis 11, wobei die Kontrollvorrichtung (4) mindestens eine Beleuchtungsvorrichtung (22) umfasst, welche auf der umlaufenden Trennwand (7) angeordnet ist und konfiguriert ist, um die Innenkammer (13) zu erhellen.

13. Kontrollvorrichtung (4) gemäß einem der Ansprüche 1 bis 11, wobei die Kontrollvorrichtung (4) eine Sicherheitsventil (29) umfasst, welches mit der Zwischenkammer (14) verbunden ist und in einen geschlossen Zustand schaltbar ist, wenn der Druck in der Zwischenkammer (14) höher oder gleich einem Druck Pmin ist und in einen offenen Zustand, wenn der Druck in der Zwischenkammer (14) niedriger als der Druck Pmin ist, um die Zwischenkammer (14) mit dem Äußeren zu verbinden.

14. Verfahren zur Kontrolle verwirklicht mit Hilfe einer Kontrollvorrichtung (4) zur Dichtigkeitskontrolle gemäß einem der vorstehenden Ansprüche auf einem Dichtungselement (1) eines Flüssigkeitsspeichertanks, wobei das Verfahren die folgenden Schritte umfasst:
- aufbringen von Wasser mit Tensiden oder injizieren eines farbigen Gases, jeweils auf oder unter einem zu testenden Bereich (2) des Dichtungselementes (1),
- anordnen der Kontrollvorrichtung (4) zur Dichtigkeitskontrolle auf dem zu testenden Bereich (2), so dass die äußere umlaufende Dichtung (12) und die innere umlaufende Dichtung (11) in Verbindung mit dem zu testenden Bereich (2) stehen,
- unter Unterdruck setzen der Innenkammer (13) und der Zwischenkammer (14) mittels der Unterdruckvorrichtung (17),
- beobachten durch die durchsichtige Abdeckung (6) des Auftretens von jeweils Blasen auf dem zu testenden Bereich (2) oder farbigem Gas in der Innenkammer (13).

15. Verfahren zur Kontrolle gemäß Anspruch 14, wobei während des Schrittes des unter Unterdruck Setzens die Zwischenkammer (14) unter einen Druck P1, welcher niedriger als der atmosphärische Druck ist, gesetzt wird.

16. Verfahren zur Kontrolle gemäß Anspruch 15, wobei während des Schrittes des unter Unterdruck Setzens die Innenkammer (13) unter eine Druck P 2, welcher niedriger als der atmosphärische Druck und höher als der Druck P 1 ist, gesetzt wird.

17. Verfahren zur Kontrolle gemäß einem der Ansprüche 14 bis 16 einer Kontrollvorrichtung (4) zur Dichtigkeitskontrolle gemäß Anspruch 5, wobei der Schritt des unter Unterdruck Setzens durch das Einschalten des Steuerorgans realisiert wird.

## Claims

1. A device (4) for checking the tightness of a sealing component, such as a membrane (1) or a multilayer, for a fluid storage tank, wherein the checking device (4) comprises a box (5) comprising:
- a peripheral partition (7),
- a cover (6) made of a transparent material, the cover (6) being connected to the peripheral partition (7) such that the cover (6) and the peripheral partition (7) are able to define, with the sealing component (1), an inner chamber (13),
the peripheral partition (7) comprising:
- an inner peripheral wall (9) having a bottom end equipped with an inner peripheral seal (11) intended to be positioned against the sealing component (1) all around the inner chamber (13); and
- a depressurizing device (17) which is connected to the inner chamber (13) and is configured to depressurize said inner chamber (13),
the checking device (4) being **characterized in that** the peripheral partition (7) comprises an outer peripheral wall (10) positioned outside the inner peripheral wall (9) so as to define, between the outer peripheral wall (10) and the inner peripheral wall (9), an intermediate chamber (14) extending exclusively in the peripheral partition (7) all around the inner chamber (13), the outer peripheral wall having a bottom end equipped with an outer peripheral seal (12) intended to be positioned against the sealing component (1) all around the inner peripheral seal (11);
the depressurizing device (17) being furthermore connected to the intermediate chamber (14) and being configured to depressurize said intermediate chamber (14),
the checking device (4) comprising an air evacuation pipe (15) which is connected, on one side, to a depressurizing member (18) of the depressurizing device (17) and, on the other side, to the intermediate chamber (14) so as to set the intermediate chamber (14) at a pressure P1 lower than atmospheric pressure,
the inner peripheral wall (9) comprising a communication channel (20) fluidically connecting the inner chamber (13) and the intermediate chamber (14).

2. The checking device (4) as claimed in claim 1, wherein the peripheral partition (7) comprises a top portion (8) connecting the outer peripheral wall (10) and the inner peripheral wall (9) to the cover (6) and tightly covering the intermediate chamber (14).

3. The checking device (4) as claimed in claim 2, wherein the ratio between a height of the inner peripheral wall (9) and a height of the peripheral partition (7) is between 5 and 70%, preferably between 15% and 50%.

4. The checking device (4) as claimed in one of claims 1 to 3, wherein the checking device (4) comprises a pressure regulator (21) placed at the communication channel (20), said pressure regulator (21) being configured so that, when the depressurizing device (17) is started up, the inner chamber (13) is set to a pressure P2 lower than atmospheric pressure and higher than the pressure P1.

5. The checking device (4) as claimed in one of claims 1 to 4, wherein the checking device (4) comprises:
- a carrying handle (23) fixed to the box (5);
- a control member (24) that can be manually actuated to produce a control signal (25), the control member (24) being positioned on or in immediate proximity to the carrying handle (23) so as to be able to be actuated by a hand of a user holding the carrying handle (23),
and wherein the depressurizing device (17) comprises a controlled valve (27) that can be switched over to an open state to connect the inner chamber (13) and the intermediate chamber (14) to the depressurizing member (18) and a closed state to isolate the inner chamber (13) and the intermediate chamber (14) from the depressurizing member (18), the checking device (4) comprising a control unit (28) configured to switch over the controlled valve (27) in response to the control signal (26).

6. The checking device (4) as claimed in claim 5, wherein the control unit (28) is configured to switch over the control valve (27) alternately between the open state and the closed state in response to the control signal.

7. The checking device (4) as claimed in claim 5, wherein the control member is a first control member (24) that can be actuated manually to produce a first control signal and the checking device further comprises a second control member (25) that can be manually actuated to produce a second control signal, the control unit (28) being configured to switch over the controlled valve (27) to the open state in response to the first control signal and to the closed state in response to the second control signal.

8. The checking device (4) as claimed in claim 7, wherein the carrying handle is a first carrying handle (23) and the checking device (4) further comprises a second carrying handle (23), the first carrying handle and the second carrying handle (23) being positioned on the perimeter of the box (5) opposite one another.

9. The checking device (4) as claimed in one of claims 1 to 8, wherein the inner peripheral seal (11) and/or the outer peripheral seal (12) has a seal end (30) forming a loop all around the inner chamber (13) and intended to be positioned against the sealing component (1), the seal end (30) all around the inner chamber being situated in a plane, and the cover being formed parallel to said plane so as to form a tightness checking device (4) for a flat zone.

10. The checking device (4) as claimed in one of claims 1 to 8, wherein the inner peripheral seal (11) and/or the outer peripheral seal (12) has a seal end (30) forming a loop all around the inner chamber and intended to be positioned against the sealing component (1), a first part (31) of the seal end being situated in a first plane P1 and a second part (32) of the seal end being situated in a second plane P2 that is inclined with respect to the first plane, and the cover being formed in a plane that is inclined with respect to the first plane and to the second plane so as to form a tightness checking device (4) for a corner zone.

11. The checking device (4) as claimed in claim 10, wherein the checking device has a longitudinal dimension between 290 and 432 mm, preferably equal to 320 mm or 430 mm, the longitudinal dimension being intended to be parallel to a tank edge during use.

12. The checking device (4) as claimed in one of claims 1 to 11, wherein the checking device (4) comprises at least one lighting device (22) fixed to the peripheral partition (7) and configured to light the inner chamber (13).

13. The checking device (4) as claimed in one of claims 1 to 11, wherein the checking device (4) comprises a safety valve (29) connected to the intermediate chamber (14) and that can be switched over to a closed state when the pressure in the intermediate chamber (14) is higher than or equal to a pressure Pmin and an open state when the pressure in the intermediate chamber (14) is lower than the pressure Pmin to connect the intermediate chamber (14) to the outside.

14. A checking method performed using a tightness checking device (4) as claimed in any one of the preceding claims on a sealing component (1) of a fluid storage tank, wherein the method comprises the following steps:
- applying water containing surface active agents or injecting a colored gas, respectively on or under a portion to be tested (2) of the sealing component (1),
- placing the tightness checking device (4) on the portion to be tested (2) so that the outer peripheral seal (12) and the inner peripheral seal (11) are in contact with the portion to be tested (2),
- depressurizing the inner chamber (13) and the intermediate chamber (14) by means of the depressurizing device (17),
- observing, through the transparent cover (6), the appearance respectively of bubbles on the portion to be tested (2) or of colored gas in the inner chamber (13).

15. The checking method as claimed in claim 14, wherein, in the depressurizing step, the intermediate chamber (14) is set to a pressure P1 lower than atmospheric pressure.

16. The checking method as claimed in claim 15, wherein, in the depressurizing step, the inner chamber (13) is set to a pressure P2 lower than atmospheric pressure and higher than the pressure P1.

17. The checking method as claimed in one of claims 14 to 16 for a tightness checking device (4) as claimed in claim 5, wherein the depressurizing step is performed by triggering the control member (24).
